# EUROPEAN PATENT APPLICATION

(11) **EP 2 298 541 A1**
(43) Date of publication of application: **23.03.2011**
(21) Application number: 09011844.9
(22) Date of filing: 17.09.2009
(51) Int. Cl.: B29C 70/46, B29C 35/04, D04H 1/60

(54) **Moulded automotive part**

(71) Applicant: Rieter Technologies AG, 8406 Winterthur (CH)
(72) Inventor: Königbauer, Stefan, 8406 Winterthur (CH); Daniere, Pierre, 8427 Rorbas (CH); Krause, Wenzel, 8002 Zürich (CH); Godano, Philippe, 8400 Winterthur (CH)

(57) **Abstract**

Composite moulded product comprising of at least one polyamide-reinforcement layer consisting of a polyamide matrix and reinforcement fibres, **characterised in that** the polyamide-reinforcement layer is porous due to the consolidation using a pressurised steam process.

## Description

The invention relates to moulded product and the method of producing it.

In the automotive industry structural panels are used in a wide variety of applications where high strength and lightweight are required. Moulded reinforced panels are particularly for use in an automotive vehicle as for instance a parcel shelf, ceiling cover, engine bay panels or load floor as well as for panels used at the outside of a car like an under engine shields or outer wheel arch liner. Additional acoustic properties for the attenuation of noise can be a requirement, in particularly the sound absorption factor of the material. For instance composite panels, eventually with a honeycomb core, are used in trim parts, sunroof panels, hard tops, parcel shelves, spare wheel covers and luggage floor assemblies. Depending on the material chosen, they can also be used as under floor, engine or engine-bay cover. Fiber reinforced composites are used as the main material or as a skin layer for these products, sometimes combined with additional layers for specific purposes.

Composite materials (or composites for short) are engineered materials made from two or more constituent materials with significantly different physical or chemical properties, which remain separate and distinct on a microscopic level within the finished structure.

Composites are made up of individual materials referred to as constituent materials. There are two categories of constituent materials: Matrix and reinforcement. At least one portion of each type is required. The matrix material surrounds and supports the reinforcement materials by maintaining their relative positions. The reinforcements impart their special mechanical and physical properties to enhance the matrix properties. A synergism produces material properties unavailable from the individual constituent materials. Engineered composite materials must be formed to shape. The matrix material can be introduced to the reinforcement before or after the reinforcement material is placed into the mould cavity or onto the mould surface. The matrix material experiences a change in physical state, for instance for thermoplastic material a melting event, after which the part shape is essentially set. Depending upon the nature of the matrix material, this melting event can occur in various ways such as chemical polymerization (duroplast) or solidification from the molten state (thermoplastic).

Most commercially produced composites use a polymer matrix material often called a resin solution. There are many different polymers available depending upon the starting raw ingredients. There are several broad categories, each with numerous variations. The most common are known as polyester, vinyl ester, epoxy, phenolic, polyimide, polyamide, polypropylene, PEEK, and others. The reinforcement materials are often fibres, but also commonly ground minerals. Composite material can be made by using a layer or mat of fibrous material at least partially consisting of reinforcing fibers like glass fibers, and a binder material, either in form of a powder, a liquid solution or as binder fibers. The materials are mixed and cured, normally by heat moulding the material in a moulding press producing directly the wanted product form.

US20050214465 discloses a process for producing a composite using polyamide as a matrix whereby the reinforcing materials are impregnated with a lactam melt activated for anionic polymerization and afterwards heated. Another known process is the pultrusion process. The material produced can be granulated and later on used in injection moulding or extrusion methods.

Another technique used is mixing the reinforcement fibres with the thermoplastic melt. Also here mostly followed by injection moulding eventually followed by press moulding to obtain the desired form of the products.

US7132025 discloses a process using thermoplastic fibres as matrix material. These fibres are first blended with the reinforcing fibres and than dry-laid to give a blended web. The web is than consolidated with needling, heated and compacted to give the final product. The web is heated to a temperature above the softening point of the thermoplastic fibres using a conventional oven or by IR radiation and directly compressed to provide a compressed and partially consolidated thermo formable semifinished product.

US20050140059 discloses a process of producing moulded parts made of fibres whereby the fibres are first heated between plates and then subjected to compression moulding, using additionally air suction to obtain a better-shaped product. The fibres used are bicomponent fibres as binder fibres and other fibres like reprocessed cotton and polypropylene as the bulk fibres. Although the use of high-pressure steam or fluid air as alternatives for the heating of the material before compression moulding are mentioned, the conditions are not further described. The temperature needed for the treatment is only defined as the prerequisite operating temperature and also not further explained in detail.

W02004098879 discloses a method of producing a composite material of a mixture of thermoplastic fibres and reinforcement fibres using a needled nonwoven web as the starting material. This web is combined with dual foils with a high melting and a lower melting thermoplastic material. The layered stack is than heated, using either IR-waves or hot air, up to such a temperature, that the thermoplastic fibres and the low melting thermoplastic material of the foil are heated above their melting temperature for a short time, long enough to enable a softening. Directly afterwards the layered material is pressed, for instance using rollers. The patent discloses as an example a combination of Polyamide-6 as the binder fibre and glass- and PET fibres as the reinforcement fibres.

Also W02007000225 discloses a method of producing a stiff part using a combination of low and high melting fibres, whereby the fibre web is heated above the melting temperature of the low melting fibres. The application further discloses the use of glass fibres or polyester fibres as high melting fibres and polypropylene or polyester as low melting fibres in a core material. This core material is layered between 2 outer thermoplastic foil layers. During the heating step the inner core material is expanding because of inner pressure in the fibres of the core, giving a lofting effect to the overall material. The final product contains partly highly compressed areas and partly this lofted areas. In praxis this is done with a combination of polypropylene and glass fibres and is called soft lofting.

A disadvantage of the state of the art is the high temperature needed to obtain the final composite. The heating temperature to be achieved is dependent on the matrix polymer. To form the composite, the matrix and reinforment fibres are heated using a dry heating method like hot air, contact heating or infrared heating. The product is normally heated above the true melting point of the matrix polymer to compensate for the temperature loss for instance from the heating device to the moulding device. Heating of a polymer above the melting point accelerates degradation.

Using a contact heater has the additional disadvantage that the product has to be compressed to obtain a good transfer of heat throughout the thickness of the product. Hot air is normally used at a temperature above the melting temperature of the binder polymer the polymer gets heat damaged, while the use of infrared heating is only feasible for thin materials. In thicker materials the amount of energy needed to heat the inner core is damaging for the outer surface polymers. This method is normally used only for a thickness up till 4-5 mm.

Another disadvantage is the fact that most thermoplastic polymers used as matrix fibres and as reinforcement fibres have their melting temperature close to each other for instance the melting temperature of poly ethylene terepthalate (PET) is in the range of 230-260 °C, for polypropylene between 140-170°C, for Polyamide-6 between 170-225°C and for Polyamide-6.6 between 220-260°C. Using matrix fibres and reinforment fibres both being thermoplastic polymers, for instance PA6.6 as matrix and PET as reinforcement, having to heat them above the melting temperature of the matrix fibres will also cause the reinforcement fibres to start melting or softening. This will lead to a collapse of the structure, forming a very compact composite.

The felts are widely used particularly in automotive industry for their thermal and acoustic insulation properties. The trend is towards recyclable materials, therefore thermoplastic binders have taken a significant share in the last years. Fibers made of high performance polymers such as polyesters, polyamide are highly interesting due to their mechanical and heat resistance properties. But the necessary binding agent form the limitation to their utilization in moulded 3D parts.

The binding agents used so far always have a lower melting point than the reinforcement fibres, rendering in relatively weak performance behaviour to the moulded fibre web and limiting its utilization to tempered areas in the vehicle. None of these types of moulded fibre webs is suitable for the high temperature exposure of the engine bay or compartment, particularly of the engine contact areas. Some of these binders are modified polymers (CO-PET as an example) having pour behaviours due to their modified structure particularly sensitive to hydrolysis phenomena.

The processes for moulding such felts as known in the state of the art are a "cold" moulding process where the felt is pre-heated by various means, and then transferred to a cold mould in which it is compressed in order to get the part shape or a "hot" moulding processes, where the felt is introduced in a closed mould, in which a heat transfer media, like air, is introduced for bringing the binding agent to its melting point, and then released. The part is then cooled down, inside the tool or outside, with or without cooling assistance. (See for instance EP1656243, EP1414440, and EP590112)

It is therefore an object of the invention to find an alternative process to combine matrix and reinforcement fibres without the disadvantages of the current state of the art and to obtain a product that can be used in automotive applications, in particularly also in the engine bay or other areas with high temperatures.

With the composite product of claim 1 consisting of at least one polyamide reinforcement layer consisting of a polyamide matrix and reinforcement fibres characterised in that the polyamide reinforcement layer is porous due to the consolidation using a pressurised steam process and the method of claim 8 using a steam process to consolidate a web of polyamide and reinforcement fibres, it is possible to contain the lofty web structure of the reinforcement fibres, obtaining a porous reinforced material. This material has a good dynamic Young's modulus and is heat stable.

A method of preparing a lofty air permeable composite with increased stiffness of randomly disposed binding fibres and reinforcement fibres held together at fibre crossover locations by globules of the thermoplastic resin of the binding fibres has been developed.

In this method, high modulus reinforcing fibres are blended with matrix forming polyamide fibres to form a web by any suitable method such as air lay, wet lay, carding etc. This web is then heated using saturated steam to melt the resin matrix fibres at a temperature that is lower than the melting temperature of the polymer as measured using Differential scanning calorimetry (DSC) according to ISO11357-3. For example the melting temperature Tₘ of polyamide-6 (PA-6) is 220°C as measured using DSC. However the melting temperature of the same PA-6 in the steam process according to the invention is for example 190°C.

The web is placed in a pressure-resistant mould with at least one steam permeable surfaces. The mould is closed and clamped to withstand the internal pressure. Saturated steam of at least 9 bars absolute is applied to melt the binder. Saturated steam above 20 bars absolute is not economical anymore. Preferably a range of 11 to 15 bars absolute is a good working range. The actual shift of the melting temperature of the polyamide is dependent on the steam pressure generated in the cavity the product is steam moulded in. The choice of the pressure used is therefore also dependent on the melting temperature of the reinforcement fibres. For instance using PA-6 as binder fibres the preferred pressures are 11 bars absolute to 15 bars absolute.

By using steam instead of the usual hot air, hot plates or IR wave it is possible to shift the melting point of Polyamide to a lower temperature using the effect of the water molecules in the steam. The effect of water on polyamide is known and is normally considered a disadvantage; many prior art describes ways to avoid the effect or try to prevent it. Unexpectedly it is just this effect, which makes it possible to combine PA fibres with other thermoplastic fibres with similar melting points as measured with DSC, like PET using PA as the sole binding material, keeping the PET in its fibrous form. It is now possible to obtain a heat stable moulded product with a porous structure thereby enhancing the acoustic properties, like absorption and airflow resistivity, as well as the thermal conductivity.

The effect of steam is based on a reversible diffusion mechanism. Using Polyamide in form of small fibre diameter or particle size the melting and solidifying is fast and provides short production cycles. Once the steam is released from the mould the Polyamide transforms into the solid state and the part can be demoulded as a stiff part. This is an advantage compared to other thermoplastic binders that need to be explicitly cooled inside or outside the mould before obtaining a structural part which is handable.

Because the overall temperature used, can now be kept much lower in comparison with the heating methods without steam, the resilience of the PET fibres is staying intact, leading to a more lofty material. Furthermore it was found that the binding of the PA was enough to obtain the required stiffness of the final product. Because the PET fibres keep their resilience and the PA molten matrix material only binds the crossing points. The material keeps its lofty appearance due to the void volume in the web. Therefore the final product will still be air permeable. Furthermore it was found that also using glass fibres as the reinforcement fibres together with polyamide fibres as the matrix the use of steam is advantageously. Due to the precise regulation of the binding properties less energy is needed for the process, both during heating and during cooling.

In the normal heating process the material is heated up to the melting point of the thermoplastic matrix material. The cooling down of the material is slow due to the slower convection of the heat out of the product and because the material has fallen together due to lack of resilience of the reinforcement fibres and has become compacter. Therefore the molten condition will continue for a longer period. It is therefore more difficult to regulate the amount of binding. Furthermore during this cooling period the material stays floppy because of the longer melted state of the binding matrix and is therefore more difficult to handle. Particularly when handling larger automotive trim part like a headliner or a load floor for a truck or larger vehicle.

Unexpectedly it was also found that as soon as the steam was taken away from the material the process of melting immediately stopped and the material obtained its solid state again. This is an advantage in the ability to reduce production cycle times due to immediately hand able material. The fact that the melting process can be stopped immediately is also a very precise way of regulating the binding properties and therefore the porosity of the material. Which is important for the air permeability properties of the material.

The material used for the polyamide matrix can be in the form of powder, flakes or fibres. However the use of fibres in combination with reinforcement fibres is the most preferred because fibres mix better and during the handling of the web formed before consolidation the fibres tend to stay in the mixed position. Flakes or powder can fall between the reinforcement fibres out of the web or on the bottom of the forming mold.

As polyamide all types of polyamide are feasible, particularly CoPA (Copolyamide) Polyamide-6 (PA-6) or Polyamide-6.6 (PA6.6). However also a mixture of different types of polyamide will work as a binder according to the invention. It is expected that normal used additives in the basic polyamide recipe are part of the basic polyamide material as claimed, for example chemical compounds to obtain Ultra Violet Resistance.

The reinforcement fibres can be any thermoplastic polymer based material with a melting temperature according to the DSC measurement, which is higher than the melting temperature of the polyamide binder in a steam environment. PET with a melting temperature of between 230-260°C would work well as a reinforcement fibre. The reinforcement fibres can also be any mineral material, in particularly glass fibres (GF), carbon fibres or basalt fibres. Also mixtures of both groups of reinforcement fibres can be used, for instance PET together with GF. The choice of material is based on the overall heat stability requirements of the final product and on the price of the individual materials.

The reinforcement fibres can be cut fibres, endless filaments or rovings dependent on the material properties needed.

These and other characteristics of the invention will be clear from the following description of preferential forms, given as non-restrictive examples with references to the attached drawings.
- Figure 1: Graph of the dynamic young modulus of different samples
- Figure 2: Graph of the loss factor of the same samples.
- Figure 3: Comparison of the acoustic absorption of a web consolidated using hot moulding plates or the steam process according to the invention
- Figure 4: Comparison of the thermal conductivity of a web consolidated using hot moulding plates or the steam process according to the invention

For the composites according to the invention, matrix-forming binder fibres were mixed with reinforcement fibres and carded to form a web. Webs were prebonded using needling for handling purposes. (But any kind of pre bonding processes can be used.) To prevent the composite samples from sticking or solidification to the mould particularly at release of the steam pressure from the tool, a thin nonwoven as surface cover can be used. The nonwoven used does have a neglectable influence on the main features like thickness, acoustic behaviour or stiffness of the final product. The webs for the polyamide-reinforcement layer according to the invention were consolidated using saturated steam as specified.

State of the art samples were compared with polyamide reinforcement layers according to the invention. The state of the art composites were bought according to the availability on the market.
- Composite 1): A state of the art composite based on polypropylene as the binder and glass fibres as the reinforcement material, having a density of 881 kg/m³ known in the market as Symalite,.
- Composite 2): A state of the art felt based material made of bicomponent PET as the binder material and cotton as the reinforcement material having a density of 314 kg/m³.
- Composite 3): A composite according to the invention made of 45% PA binder fibres and 55% of glass fibres as the reinforcement fibres. Starting weight of the web was 1000 gram per m². The composite was moulded according to the invention using 11 bars absolute of saturated steam for 9 sec. The final density of the formed polyamide reinforcement layer is 384 kg/m³.
- Composite 4): A composite according to the invention made of 55% PA binder fibres and 45% of glass fibres as the reinforcement fibres. Starting weight of the web was 1000 gram per m². The composite was moulded according to the invention using 11 bars absolute of saturated steam for 9 sec. The final density of the formed polyamide reinforcement layer is 303 kg/m³.

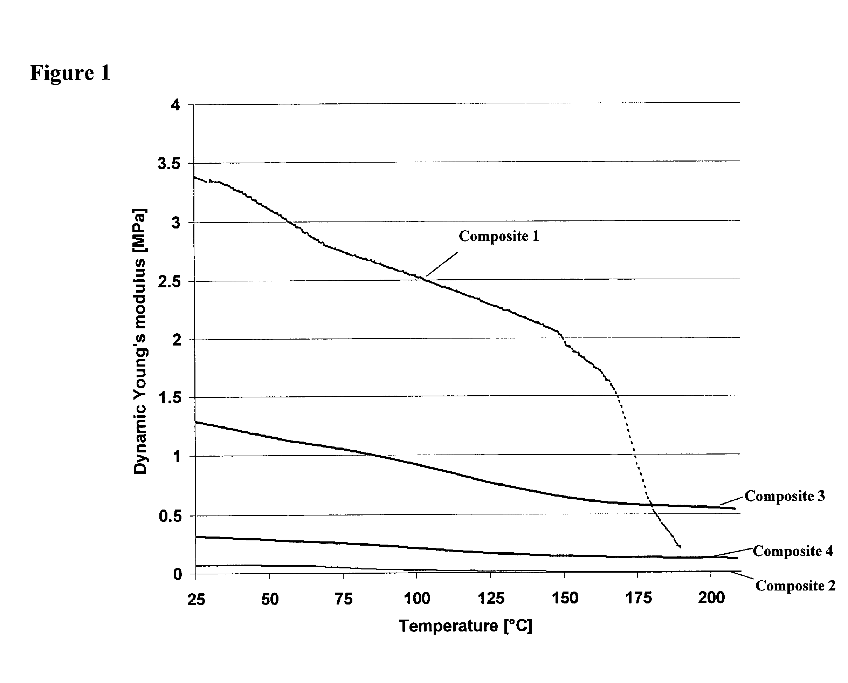

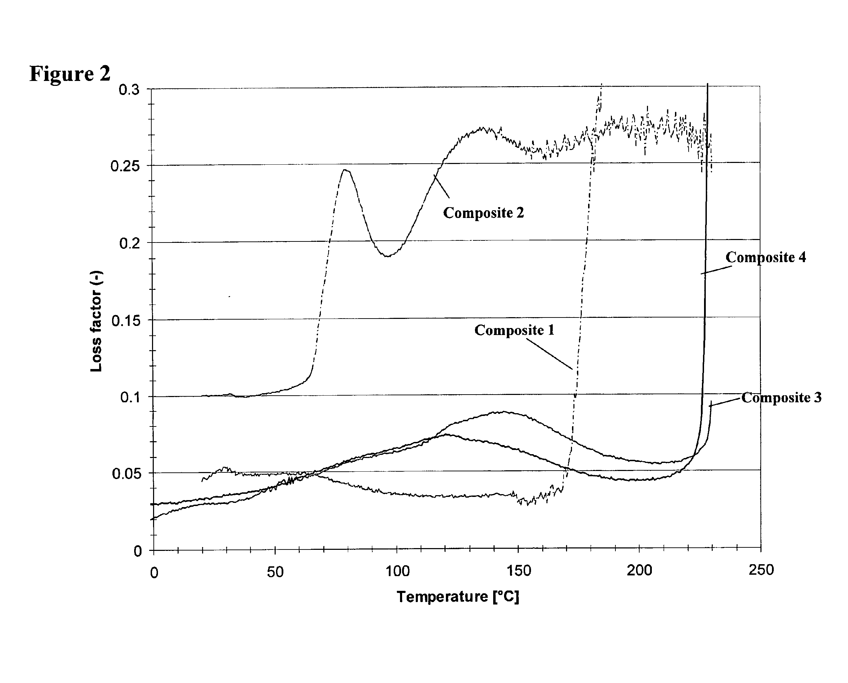

The dynamic young modulus over a temperature range was measured, and from this the tensile loss factor was calculated according to ISO 6721-4. The measurements and calculations were done using a 0.1dB Metravib Viscoanalyser Type VA 2000. See figure 1 and 2 for the results on all composites

For composite parts used in the automotive industry heat stability requirements are increasing. Particularly in the engine bay directly due to new motor generations generating more heat, as well as due to the option to keep the heat inside using isolation to optimise the overall use of fuel, leads to higher heat stability requirements. Normally the test for engine bay material is a long-term heat stability test at 120°C or at 150°C. However the actual temperature can rise easily to 180-190°C for a short time. This temperature range can occur close or around hot engine sides, like exhaust line, manifold or compressors.

One requirement of the heat stability test is to know if the composite product keeps its form and shape during the exposure to heat. For instance a parcel shelf placed under a sunny window should not sag after a while. An engine bay cover should keep its stiffness. The tensile loss factor over this temperature range is important for the stiffness retention of the product, when in use.

Figure 1 shows the dynamic young modulus. Composite 1 the state of the art product based on a PP matrix and Glass fibres as reinforcement shows in absolute terms a higher modulus than composite 3 and 4 according to the invention. This is mainly due to the higher overall density. However the trend is to obtain the same or better stiffness performance at a lower density saving weight in the car. More important however is that the state of the art composite 1 shows a significant loss of dynamic young modulus over the temperature range measured. Therefore products made of combinations with PP tend to get softer at higher temperature. Composite 2 is a combination of CoPET/PET bicomponent binding fibres and cotton as the reinforcement material showing an overall too low dynamic young modulus to be self-supporting.

The composites according to the invention show a much better behaviour over the temperature range measured. It was found that the dynamic young modulus of the polyamide reinforcement layer does not change more than 20% over a temperature range of 150°C to 210°C. Rendering an overall more heat stable product.

Figure 2 shows the tensile loss factor over the temperature range measured on the composite products. Composites 1 is state of the art based on polypropylene (PP) as matrix binder fibre produced with a moulding method without steam. Although the products have a good loss factor up till 160°C, it rapidly looses its heat stability due to melting.

Composite 2 is a combination of CoPET/PET bicomponent binding fibres together with cotton as the reinforcement fibres. Therefore the bad loss factor over the measured temperature range is basically due to the CoPET, already softening at 80°C and above 110°C starting to melt. Although this is dependent on the CoPET used. Higher melting CoPET has other disadvantages including an increase in cost. In an absolute way, a composite material using PET alone would give a product with a good heat stability, it is not known today how this can be achieved, without heat damaging the reinforcement fibres due to the very high melting T needed.

Composite 3 and 4 are combinations of PA binder with glass fibre reinforcement fibres consolidated using steam according to the invention. Both have a stable tensile loss factor (-) of less than 0.15 over a temperature range of 60-210°C.

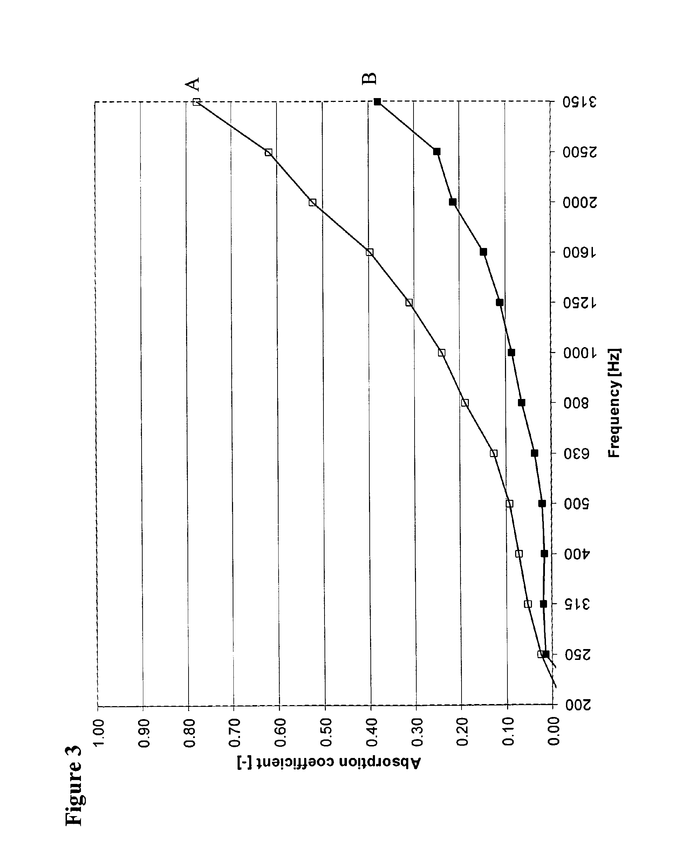

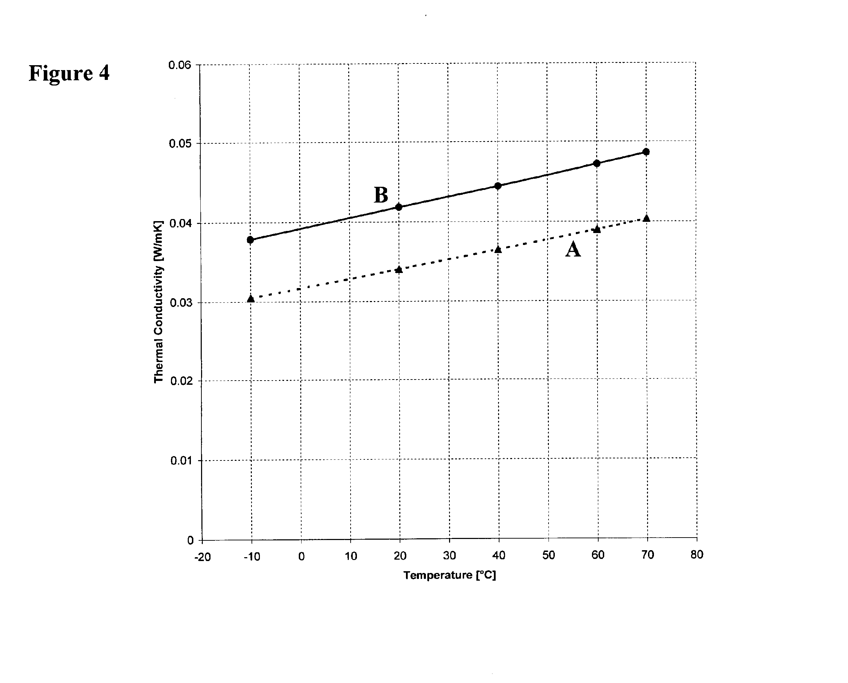

The polyamide reinforcement product can be compressed fully or partially to obtain a formed product. Due to the consolidation process using saturated steam according to the invention it is possible to obtain a product with a lower density and still obtain the wanted stiffness. Because the heating process using saturated steam melts the polyamide binder fibres at a much lower temperature than the thermoplastic reinforcement fibres, and all across the thickness at a nearly same time, the resilience on web structure of the reinforcement fibres can be kept. By reducing the amount of matrix forming polyamide to such a level that the overall product is just fully bonded, a porous reinforcement layer can be obtained with a density that is only 5 to 80% of the bulk density of the materials of the composite. However preferably a range from 5 to 60%, even more preferably 5 to 25% is obtainable and more advantages due to the lower costs of the overall part. Therefore it is possible to obtain a product that is not solid but stays porous, rendering in a better acoustic absorber (see figure 3) due to the porosity of the material as well as a better thermal conductivity (see figure 4). By adjusting the density either by more compacting or by increasing the amount of PA matrix it is possible to adjust both the acoustic properties as well as the thermal conductivity.

Sample A and B were produced using the same web material of 65% Glass fibres and 35% PA binder fibres. Composite A was consolidated using the saturated steam according to the invention and Composite B was consolidated using compression between hot plates. Both were treated such that a fully bonded product was achieved.

The acoustic absorption properties of the composites formed were measured using an impedance-tube, according to the ASTM (E-1050) and ISO (10534-1/2) standards for impedance tube measurements (measurement between 200 and 3400 Hz). The thermal conductivity was measured using a guarded hot plate according to ISO8301.

The acoustic absorption and the thermal conductivity were found to be better in the steam treated product than in the hot plate treated product. This is partly due to the necessity to use more compression during the heating process using hot plates to obtain a fully bonded product. Therefore obtaining a denser product B in the first place, hence a less porous product, showing a decrease in both thermal conductivity and acoustic property.

## Claims

1. Composite moulded product comprising of at least one polyamide-reinforcement layer consisting of a polyamide matrix and reinforcement fibres, **characterised in that** the polyamide-reinforcement layer is porous due to the consolidation using a pressurised steam process.

2. The moulded product according to claim 1 whereby the dynamic young modulus of the polyamide-reinforcement layer does not change more than 20% over a temperature range of 150°C to 210°C.

3. The moulded product according to claim 1 or 2 whereby the density of the composite is from 5% to 80% of the bulk density of the materials of the polyamide reinforcement layer.

4. The moulded product according to one of the preceding claims whereby the tensile loss factor (-) of the final product is less than 0.15 over a temperature range of 60°C to 210°C.

5. The product according to one of the preceding claims whereby the polyamide matrix is polyamide-6 or polyamide-6.6 or a mixture of different types of polyamide.

6. The moulded product according to one of claims 1 to 5 whereby the reinforcement fibres are mineral fibres like glass fibres or carbon fibres or basalt fibres.

7. The moulded product according to one of the claims 1 to 5 whereby the reinforcement fibres are thermoplastic polymer fibres with a melting temperature measured according to DSC which is higher than the melting temperature of the polyamide under steam pressure.

8. Method of producing a porous moulded product comprising of randomly disposing polyamide binding fibres and reinforcement fibres to form a web and treating this web with pressurised steam to consolidate the web.

9. Method according to claim 8 whereby saturated steam in the range of 9 to 20 bars absolute is used.

10. Method according to claim 8 or 9 whereby web is treated in a pressure resistant mould with at least one steam permeable surface forming a moulded product.

11. Method according to one of the preceding claims whereby the web is prebonded, preferably by needling, before transfer to the steam treatment.
